# EUROPEAN PATENT APPLICATION

(11) **EP 0 593 153 A1**
(43) Date of publication of application: **20.04.1994**
(21) Application number: 93306256.4
(22) Date of filing: 06.08.1993
(51) Int. Cl.: A01K 63/00, A01K 63/06

(54) **Ornament system for aquarium and ornamental article used in the system**

(30) Priority: 13.10.1992 JP 71219/92 U
(71) Applicant: TOCHIGI TOMY KOGYO CO., INC., Tokyo (JP)
(72) Inventor: Oyama, Ken c/o Tochigi Tomy Kogyo Co.,Inc., Shimotsuga-Gun, Tochigi-Ken (JP); Fukadu, Kazuo c/o FFK Denshi Kogyo Yugen Kaisha, Kawauchimachi, Kawauchi-Gun, Tochigi-Ken (JP)
(74) Representative: Clifford, Frederick Alan

(57) **Abstract**

An ornament system for an aquarium (1) includes an ornamental article (5, 6, 12) having a body and a fluorescent material provided on the body, and a irradiation unit (7) for radiating an electro-magnetic wave having a predetermined wavelength falling within an ultraviolet range, wherein the aquarium (1) is provided with the ornamental article (5, 6, 7) and the irradiation unit (7) so that the ultraviolet radiation projects onto the fluorescent material of the ornamental article (5, 6, 12) and the fluorescent material radiates a fluorescence having a predetermined color. An ornamental article (5, 6, 12) with which an aquarium (1) is to be provided includes a body, and a fluorescent material provided on the body, an ultraviolet radiation projecting onto the fluorescent material of the ornamental article so that the fluorescent material radiates a fluorescence having a predetermined color.

## Description

### BACKGROUND OF THE INVENTION

### (1) Field of the invention

The present invention generally relates to an ornament system for an aquarium and an ornamental article used in the ornament system, and more particularly to an ornament system for an aquarium and an ornamental article by which a visional aquarium can be obtained.

### (2) Description of the related art

Aquarium fishes such as tropical fishes are kept in an aquarium, and because of their glittering colors and fantastic forms are enjoyed as interior decoration. To breed the aquarium fishes, the aquarium filled with water is provided with an oxygen supplier for supplying air (including oxygen) in the water, a thermo-controller for maintaining the water at a temperature suitable for breeding the tropical fishes and the like. In addition, water plants are provided, for causing the habitat (the tropics) of the tropical fishes to be easily imagined, or visualized, and various ornamental articles are arranged in the aquarium. For example, natural products, such as driftwoods and rocks are arranged as the ornamental articles in the aquarium.

The aquarium in which aquarium fishes are bred and various ornamental articles are arranged is popular as interior decoration. Increasing demand requires that the aquarium be fantastic and visional.

### SUMMARY OF THE INVENTION

Accordingly, a general object of the present invention is to provide a novel and useful ornament system for an aquarium, and an ornamental article used in the system.

A more specific object of the present invention is to provide an ornament system by which a fantastic and visional aquarium can be constituted.

The above objects of the present invention are achieved by an ornament system for an aquarium comprising: an ornamental article having a body and a fluorescent material provided on the body; and a irradiation unit for radiating an electro-magnetic wave having a predetermined wave length falling within an ultraviolet range, wherein the aquarium is provided with the ornamental article and the radiation unit so that the ultraviolet radiation projects onto the fluorescent material of the ornamental article and the fluorescent material radiates a fluorescence having a predetermined color.

Another object of the present invention is to provide an ornamental article usable in the above ornament system.

The objects of the present invention are achieved by an ornamental article with which an aquarium is to be provided, the ornamental article comprising: a body; and a fluorescent material provided on the body, an ultraviolet radiation projecting onto the fluorescent material of the ornamental article so that the fluorescent material radiates a fluorescence having a predetermined color.

According to the present invention, the fluorescent material of the ornamental article radiates fluorescence having the predetermined color due to the irradiation of the ultraviolet from the radiation unit. That is, the ornamental article is bright inside the aquarium. Thus, the aquarium has the fantastic and vision-like atmosphere.

Additional objects, features and advantages of the present invention will become apparent from the following detailed description when read in conjunction with the accompanying drawings.

### BRIEF DESCRIPTION OF THE DRAWINGS

FIG.1 is a perspective view illustrating an aquarium provided with an ornament system according to an embodiment of the present invention.

FIG.2 is a diagram illustrating an example of an ornamental article to be provided in the aquarium.

### DESCRIPTION OF THE PREFERRED EMBODIMENTS

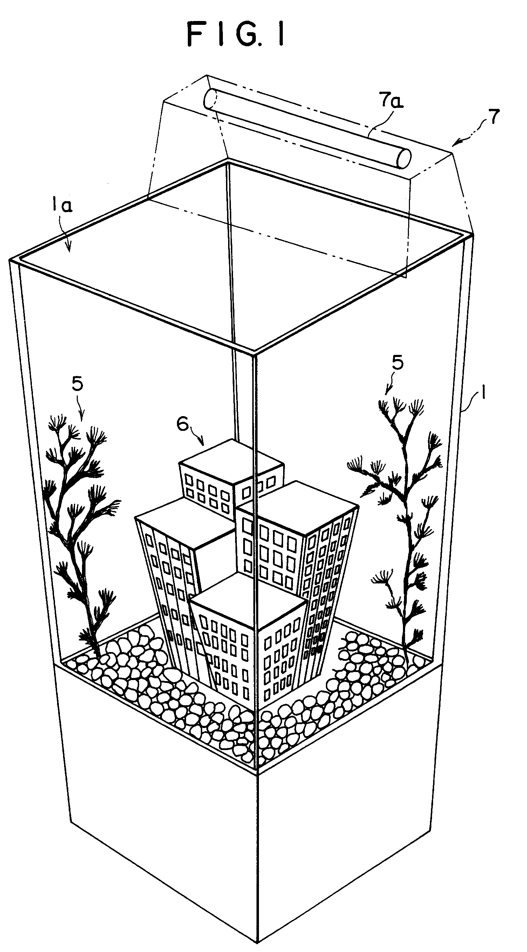

A description will now be given, with reference to FIG.1, of an embodiment of the present invention.

Referring to FIG.1, a box-shaped aquarium 1 is formed of five plane glasses and a top thereof is an opening 1a. The aquarium 1 can be filled with water, for example, 60 liters thereof. The aquarium 1 is provided with an oxygen supplier, a thermo-controller and a purifier and the like. The oxygen supplier is constituted of an air pump unit, an air tube, a filter unit and like, and supplies air in the water in the aquarium 1. The thermo-controller is constituted of a heater unit, a thermostat and the like, and controls the temperature of the water so as to maintain the temperature at a predetermined value (e.g. 25°C) suitable for breeding tropical fishes.

Fine gravel is spread over the bottom surface of the aquarium 1. Two kinds of modeling articles 5 and 6 are arranged underwater as ornamental articles on the fine gravel in the aquarium 1. A brack-light lamp unit 7 is mounted on the top of the aquarium 1 so as to face the opening 1a of the aquarium 1. The black-light lamp unit 7 has a black-light fluorescent tube 7a for radiating ultraviolet rays.

Each of first modeling articles 5 is a plastic model of a water plant. A weight made of metal is fixed on the root of each of the first modeling articles 5 (modeled on water plants), so that the root of each of the first modeling articles 5 is located on the fine gravel without floating in the water. The first modeling articles 5 are colored, for example, green so as to appear to be a water plant. The first modeling articles 5 are further coated with a clear fluorescent paint. This fluorescent paint is activated by an electro-magnetic wave having a wavelength falling within a range corresponding to the near ultraviolet ray, so that a green fluorescence like a natural color is radiated from the fluorescent paint.

Each of second modeling articles 6 is a plastic model of a building. A weight made of metal is mounted on a bottom surface of each of the second modeling articles 6 so that the base of each of the second modeling articles 5 is located on the fine gravel without floating in the water. Windows and doorways are formed on walls of each building of the second modeling articles 6. Each of the second modeling articles 6 is coated with two types of clear fluorescent paint. Parts of walls, which parts correspond to the windows, are coated with the first type of fluorescent paint. Other parts of the walls are coated with the second type of fluorescent paint. These two types of fluorescent paints are also activated by an electro-magnetic wave having wavelength the near ultraviolet. The first and second types of fluorescent paints exited by the electro-magnetic wave radiate, for example, a red fluorescence and a blue fluorescence.

The black-light lamp unit 7 is one type of well known mercury-vapor lamp unit having a glass tube in which a thin fluorescent film is uniformly coated on the inner wall. The black-light lamp unit 7 is driven by a lighting circuit, the fluorescent material (e.g. barium silicate) in the black-light fluorescent tube 7a is exited by a ultraviolet radiation falling within the range 180nm-280nm, and the black-light fluorescent tube 7a radiates electro-magnetic waves falling within a range corresponding to the near ultraviolet ray having a maximum energy of 360nm. The black-light fluorescent tube 7a is formed of black glass transparent to the ultraviolet rays so that electro-magnetic waves falling within a range corresponding to visible radiation are absorbed by the black glass. Only electro-magnetic waves having wavelengths near the ultraviolet are radiated outside of the black glass forming the black-light fluorescent tube 7a.

Electro-magnetic waves having wavelengths equal to or less than 380nm do not pass through the plane glasses forming the aquarium 1. Thus, the near ultraviolet rays radiated from the black-light lamp unit 7 are projected onto the modeling articles 5 and 6 via only the opening 1a of the aquarium 1.

If the aquarium 1 is located in a room, and the black-light lamp unit 7 is turned on under a condition in which the room is maintained in dark, the near ultraviolet rays radiated from the black-light tube 7a project onto the first and second modeling articles 5 and 6 in the aquarium 1. The first modeling articles 5 modeled on water plants radiate the green fluorescence corresponding to the fluorescent paint coated thereon. That is, the first modeling articles 5 are bright green in the dark aquarium 1. The second modeling articles 6 modeled on buildings also radiate fluorescence. In each of the second modeling articles 6, the parts corresponding to the windows radiate red fluorescence and the other parts radiate blue fluorescence. That is, the second modeling articles 6 are divisionally bright in two colors: red and blue, in the dark aquarium 1.

Various kinds of tropical fishes swim in the water in the aquarium 1 in which the first and second modeling articles 5 and 6 are visionally bright as described above. As a result, the aquarium 1 has fantastic and visional atmosphere.

Modeling articles modeled on other natural products, such as rocks and driftwoods, and on other structures may be arranged in the aquarium 1. In this case also, each of the modeling articles is coated with clear fluorescent paint capable of radiating a fluorescence so as to be bright in a predetermined color. Particularly in a case where the modeling articles are modeled on buildings, it seems that the tropical fishes swim in spaces among the buildings which are visionally bright various colors. Thus, the aquarium 1 can have a more fantastic and visional atmosphere than a conventional case in which natural products are arranged in the aquarium 1.

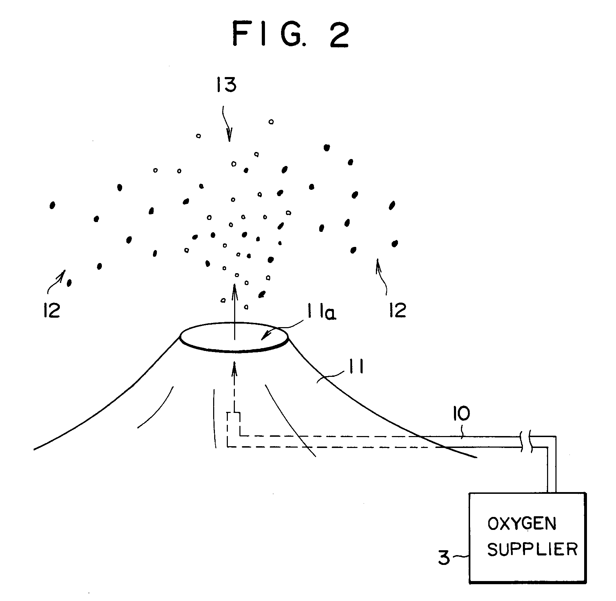

A description will now be given, with reference to FIG.2, of another embodiment of the present invention.

FIG.2 shows a modeling article 11 modeled on a volcano, which article is to be provided in the aquarium 1. The modeling article 11 is arranged at a predetermined position on the fine gravel in the aquarium 1 instead of the modeling articles 5 and 6 shown in FIG.1. The modeling article 11 has a concavity 11a formed on the top thereof, which concavity is modeled on a crater of a volcano. An air tube 10 is put into the modeling article 11 so that a first end of the air tube 10 is located in the concavity 11a of the modeling article 11. The air tube 10 extends to the oxygen supplier 3 and a second end of the tube 10 is connected to the air pump unit in the oxygen supplier 3. The air from the air pump of the oxygen supplier 3 passes through the air tube 10 and air bubbles 13 are spouted from the first end of the air tube 10 into the water, so that the air bubbles 13 rise from the concavity 11a into the water. The inner wall of the concavity 11a, and the edge of the concavity 11a are coated with a fluorescent paint capable of radiating a fluorescence so as to be bright red. A pattern corresponding to a lava flow is painted with the fluorescent paint on the outer wall of the modeling article 11. Many pellets 12 coated with the fluorescent paint radiating a bright red fluorescence float in the water. The pellets 12 are formed of fluorescent material capable of radiating a fluorescence so as to be bright red, or are coated with the fluorescent paint. The pellets 12 are moved effervescently by the stream of air bubbles rising from the concavity 11a.

When in a dark room, the black-light lamp unit 7 is turned on, the near ultraviolet rays project onto the modeling article 11 and the pellets 13 floating in the water, so that the modeling article 11 and the pellets 13 are visionally bright red. In this case, as the pellets 13 are moved effervescently from the concavity 11a of the modeling article 11, it seems that the volcano (the modeling article 11) is in eruption and spewing red-hot lava (the pellets 12) from the crater (the concavity 11a). When various kinds of tropical fishes swim in a space of the volcano's eruption, as described above, the aquarium 1 creates a fantastic and vision-like atmosphere.

In the above embodiments, as the modeling articles are made of plastic, the modeling articles do not decomposed in the water of the aquarium 1. Thus, the water in the aquarium 1 does not become contaminated with decomposing matter from the modeling articles.

The ornamental articles to be arranged in the aquarium 1 are not limited to the modeling articles and the pellets as described above. For example, a modeling article modeled on a train may be moved using a water stream generated by a filter unit, the modeling article being coated with one or a plurality of fluorescent paints. In addition, a panel or screen on which various scenes are printed using fluorescent paint may be put on a plane glass of the aquarium 1. Natural rocks and driftwoods coated with fluorescent paints may be also arranged in the aquarium 1.

The present invention is not limited to the aforementioned embodiments, and variations and modifications may be made without departing from the scope of the claimed invention.

## Claims

1. An ornament system comprising an ornamental article (5, 6, 12) with which an aquarium (1) is provided **characterized in that** said ornamental article (5, 6, 12) has a fluorescent material provided on a body thereof, and said ornament system further comprises a irradiation unit (7) for radiating an electro-magnetic wave having a predetermined wavelength falling within an ultraviolet range, wherein the aquarium (1) is provided with said irradiation unit (7) so that the ultraviolet radiation projects onto said fluorescent material of said ornamental article (5, 6, 12) and said fluorescent material radiates a fluorescence having a predetermined color.

2. The ornament system as claimed in claim 1, **characterized in that** said ornamental article is a modeling article (5, 6) modeled on a predetermined structure.

3. The ornament system as claimed in claim 1, **characterized in that** said irradiation unit is a black-light lamp unit (7) outputting an ultraviolet radiation.

4. The ornament system as claimed in claim 1, **characterized in that** the body of said ornamental article (5, 6, 12) is coated with a fluorescent paint so that the fluorescent material is provided on the body.

5. An ornamental article (5, 6, 12) with which an aquarium (1) is to be provided **characterized in that** said ornamental article (5, 6, 12) comprises:
a body; and
a fluorescent material provided on said body, an ultraviolet radiation projecting onto said fluorescent material of said ornamental article (5, 6, 12) so that said fluorescent material radiates a fluorescence having a predetermined color.

6. The ornamental article as claimed in claim 5, **characterized in that** said ornamental article (5, 6, 12) is modeled on a predetermined structure.

7. The ornamental article as claimed in claim 5, **characterized in that** the body of said ornamental article (5, 6, 12) is coated with a fluorescent paint so that the fluorescent material is provided on the body.
